# EUROPEAN PATENT APPLICATION

(11) **EP 2 800 436 A1**
(43) Date of publication of application: **05.11.2014**
(21) Application number: 11878638.3
(22) Date of filing: 28.12.2011
(51) Int. Cl.: H04W 72/08

(54) **AUTO REJECTION CONTROL METHOD AND SYSTEM, BASE STATION AND USER EQUIPMENT**

(71) Applicant: Fujitsu Limited, Kawasaki-shi, Kanagawa 211-8588 (JP)
(72) Inventor: WANG, Weiwei, Beijing 100025 (CN); ZHOU, Hua, Beijing 100025 (CN)
(74) Representative: Ward, James Norman
(86) International application number: PCT/CN2011/084819
(87) International publication number: WO 2013/097114

(57) **Abstract**

Embodiments of the present invention provide a control method and a system for autonomous denial, an eNB and user equipment. The control method includes: transmitting, by an eNB to user equipment, autonomous denial configuration information, the autonomous denial configuration information being set according to uplink data of the user equipment. With the embodiments of the present invention, uplink data may be autonomously denied more accurately, and performance of the system will not be degraded.

## Description

### Technical Field

The present invention relates to the field of communications, and in particular to a control method and a system for autonomous denial, an eNB and user equipment.

### Background

In order to realize network access everywhere, terminal equipment may possibly be designed as a coexistence system, which needs multiple transceivers to be mounted for accessing to different networks. For example, the terminal equipment may be mounted with transceivers of a long-term evolution (LTE) system and an industrial scientific medical (ISM) system (such as WiFi, and BlueTooth, etc.).

Currently, in a coexistence system, uplink data of an LTE module disable an ISM module to correctly receive some important data of not very high frequencies (such as a connection establishment message, and a beacon message, etc.); and on the contrary, uplink data of an ISM module may also disable an LTE module to correctly receive data.

In order to solve this problem, an autonomous denial mechanism is considered as a feasible scheme. Such a scheme enables that when a user equipment finds that its ISM module is receiving some important data of not very high frequencies, the user equipment may autonomously deny uplink data of an LTE module coinciding with the receiving of the data, or when the user equipment finds that its LTE module is receiving some important data, the user equipment may autonomously deny uplink data of an ISM module coinciding with the receiving of these data;
wherein, in a particular implementation, a scheme of an existing autonomous denial mechanism may include two aspects: (1) an eNB side controls user equipment whether to employ an autonomous denial mechanism, that is, the eNB side controls the user equipment and enables the user equipment to employ an autonomous denial mechanism, or disables the user equipment to employ an autonomous denial mechanism; and (2) the user equipment actively reports to the eNB side that in which subframes an autonomous denial mechanism is employed.

However, in the implementation of the present invention, the inventors found that a defect of the relevant art resides in that when user equipment is disabled to employ an autonomous denial mechanism, receiving of important data by an LTE module or an ISM module will be affected, and when user equipment is enabled to employ an autonomous denial mechanism, the autonomous denial mechanism results in that the eNB side cannot receive uplink data, thereby control signaling indicating transmission of these uplink data is deemed to be dropped. If the dropped control signaling exceeds a threshold within a certain period of time, the eNB side will adjust control channels transmitting the control signaling, thereby lowering a performance of the system.

Furthermore, in a case where the user equipment actively reports to the eNB side that in which subframes an autonomous denial mechanism is employed, as the user equipment does not know when the eNB side adjusts the control channels, it has to frequently report that in which subframes an autonomous denial mechanism is employed, thereby increasing a signaling overhead.

It should be noted that the above description of the background is merely provided for clear and complete explanation of the present invention and for easy understanding by those skilled in the art. And it should not be understood that the above technical solution is known to those skilled in the art as it is described in the background of the present invention.

### Summary

Embodiments of the present invention provide a control method and a system for autonomous denial, an eNB and user equipment, with an object being to autonomously deny uplink data of the user equipment more accurately.

According to one aspect of the embodiments of the present invention, there is provided a control method for autonomous denial, including:
transmitting, by an eNB to user equipment, autonomous denial configuration information, the autonomous denial configuration information being set according to uplink data of the user equipment.

According to another aspect of the embodiments of the present invention, there is provided a control method for autonomous denial, including:
transmitting, by an eNB to user equipment, an autonomous denial request message when the eNB needs to adjust a control channel; and
receiving, by the eNB, an autonomous denial report fed back by the user equipment; wherein the autonomous denial report contains autonomous denial information of the user equipment.

According to still another aspect of the embodiments of the present invention, there is provided a control method for autonomous denial, including:
receiving, by user equipment, an autonomous denial request message transmitted by an eNB;
generating an autonomous denial report according to the autonomous denial request message, the autonomous denial report including autonomous denial information of the user equipment; and
transmitting the autonomous denial report to the eNB.

According to still another aspect of the embodiments of the present invention, there is provided an eNB, including:
an information transmitting unit configured to transmit autonomous denial configuration information to user equipment; wherein the autonomous denial configuration information is set according to uplink data of the user equipment.

According to still another aspect of the embodiments of the present invention, there is provided an eNB, including:
a request transmitting unit configured to transmit an autonomous denial request message to user equipment when it is needed to adjust a control channel and
a report receiving unit configured to receive an autonomous denial report fed back by the user equipment, the autonomous denial report including autonomous denial information of the user equipment.

According to still another aspect of the embodiments of the present invention, there is provided user equipment, including:
a request receiving unit configured to receive an autonomous denial request message transmitted by an eNB;
a report generating unit configured to generate an autonomous denial report according to the autonomous denial request message, the autonomous denial report including autonomous denial information of the user equipment; and
a report transmitting unit configured to transmit the autonomous denial report to the eNB.

According to still another aspect of the embodiments of the present invention, there is provided a control system for autonomous denial, including the eNB as described above and the user equipment as described above.

According to still another aspect of the embodiments of the present invention, there is provided a computer-readable program, wherein when the program is executed in an eNB, the program enables a computer to carry out the control method for autonomous denial as described above in the eNB.

According to still another aspect of the embodiments of the present invention, there is provided a storage medium in which a computer-readable program is stored, wherein the computer-readable program enables a computer to carry out the control method for autonomous denial as described above in an eNB.

According to still another aspect of the embodiments of the present invention, there is provided a computer-readable program, wherein when the program is executed in user equipment, the program enables a computer to carry out the control method for autonomous denial as described above in the user equipment.

According to still another aspect of the embodiments of the present invention, there is provided a storage medium in which a computer-readable program is stored, wherein the computer-readable program enables a computer to carry out the control method for autonomous denial as described above in user equipment.

The advantage of the embodiments of the present invention resides in that with the autonomous denial configuration information set according to uplink data of the user equipment, the uplink data may be autonomously denied more accurately, and performance of the system will not be degraded.

With reference to the following description and drawings, the particular embodiments of the present invention are disclosed in detail, and the principle of the present invention and the manners of use are indicated. It should be understood that the scope of the embodiments of the present invention is not limited thereto. The embodiments of the present invention contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "includes/including/comprises/ comprising" when used in this specification is taken to specify the presence of stated features, integers, steps or components but does not preclude the presence or addition of one or more other features, integers, steps, components or groups thereof.

### Brief Description of the Drawings

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated or reduced in size.

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.
Figure 1 is a flowchart of the control method for autonomous denial of Embodiment 1 of the present invention;
Figure 2 is another flowchart of the control method for autonomous denial of Embodiment 1 of the present invention;
Figure 3 is a schematic diagram of the structure of the eNB of Embodiment 1 of the present invention;
Figure 4 is another schematic diagram of the structure of the eNB of Embodiment 1 of the present invention;
Figure 5 is a flowchart of the control method for autonomous denial of Embodiment 2 of the present invention;
Figure 6 is another flowchart of the control method for autonomous denial of Embodiment 2 of the present invention;
Figure 7 is a schematic diagram of the structure of the user equipment of Embodiment 2 of the present invention;
Figure 8 is another schematic diagram of the structure of the user equipment of Embodiment 2 of the present invention;
Figure 9 is a flowchart of the control method for autonomous denial of Embodiment 3 of the present invention;
Figure 10 is a schematic diagram of the structure of the eNB of Embodiment 3 of the present invention;
Figure 11 is a flowchart of the control method for autonomous denial of Embodiment 4 of the present invention; and
Figure 12 is a schematic diagram of the structure of the user equipment of Embodiment 4 of the present invention.

### Detailed Description

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited thereto. Rather, the invention includes all changes, modifications and equivalents coming within the spirit and terms of the appended claims.

### Embodiment 1

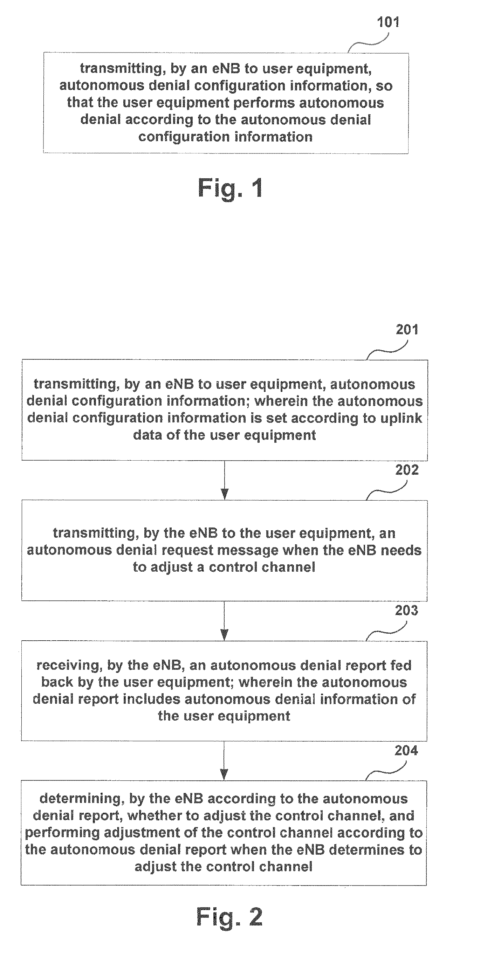

An embodiment of the present invention provides a control method for autonomous denial. Fig. 1 is a flowchart of the control method for autonomous denial of the embodiment of the present invention. As shown in Fig. 1, at an eNB side, the method includes:
step 101: transmitting, by an eNB to user equipment, autonomous denial configuration information, so that the user equipment performs autonomous denial according to the autonomous denial configuration information; wherein the autonomous denial configuration information is set according to uplink data of the user equipment.

In this embodiment, the uplink data of the user equipment may be uplink data of an LTE module, and may also be uplink data of an ISM module. However, it is not limited thereto, and particular uplink data may be determines according to an actual situation.

In this embodiment, the eNB may configure the user equipment by using the autonomous denial configuration information, and may inform the user equipment of which uplink data may employ an autonomous denial mechanism and which uplink data may not employ an autonomous denial mechanism. Therefore, the user equipment is made to employ flexibly an autonomous denial mechanism, and accuracy of autonomous denial may further be enhanced.

For example, the autonomous denial configuration information may be set according to importance of the uplink data. If the uplink data are very important, they may be set as being unable to employ an autonomous denial mechanism; and if the uplink data are not important, they may be set as being able to employ an autonomous denial mechanism.

Or, the autonomous denial configuration information may be set according to a type of the uplink data. Some types of uplink data may be set as being unable to employ an autonomous denial mechanism, and some types of uplink data may be set as being able to employ an autonomous denial mechanism.

In a particular implementation, in a mode of implementation, the autonomous denial configuration information may include the following information: if the uplink data contains bundled ACK/NACK, the autonomous denial of the uplink data is disabled.

In particular, in an LTE module for example, ACK/NACK messages for multiple downlink data may be bundled by the user equipment, and are notified to the eNB via an uplink data transmission. In this way, the larger the number of downlink data acknowledged by the uplink data transmission, the more the packets retransmitted due to the autonomous denial, and the larger the extent of degradation of the system performance.

Therefore, the eNB may inform the user equipment via the autonomous denial configuration information that an autonomous denial mechanism cannot be executed if the uplink data transmission and the ACK/NACK are bundled. Furthermore, the autonomous denial of the uplink data may be disabled if the number of pieces of the ACK/NACK of the uplink data exceeds a certain threshold.

In another mode of implementation, the autonomous denial configuration information may include the following information: if the uplink data have a high requirement on quality of service (QoS), the autonomous denial of the uplink data is disabled.

In particular, if some uplink data have a high requirement on QoS, for example, the requirement on QoS is higher than a predefined threshold value, such uplink data transmission cannot be autonomously denied; wherein, the requirement on QoS may be time delay, etc.

It should be noted that the above description of autonomous denial configuration information is illustrative only, and it is not limited thereto. It is understood by those skilled in the art that only autonomous denial configuration information is set according to uplink data of user equipment, and it is covered by the scope of the present invention.

In this embodiment, it is usual that when the eNB finds that a data dropping rate (and/or error rate) in a physical control channel within a certain period of time reaches a threshold value, it will be deemed that a channel condition is poor, and the control channel needs to be adjusted. However, after an autonomous denial mechanism is employed, a reason that the eNB cannot receive scheduled uplink data may be autonomous denial of the user equipment, but not because that the control channel is dropped (or the control channel errs) due to poor channel condition.

Thus, when the user equipment is enabled to employ an autonomous denial mechanism, an effect of the mechanism on the adjustment of the control channel needs to be eliminated. It is understood by those skilled in the art that the eNB is well aware of when to adjust the control channel. Hence, an autonomous denial report mechanism triggered by an eNB is defined in the present invention.

Fig. 2 is another flowchart of the control method for autonomous denial of an embodiment of the present invention. As shown in Fig. 2, at an eNB side, the method includes:
step 201: transmitting, by an eNB to user equipment, autonomous denial configuration information; wherein the autonomous denial configuration information is set according to uplink data of the user equipment.

As shown in Fig. 2, after the eNB transmits the autonomous denial configuration information to the user equipment, the method may further include:
step 202: transmitting, by the eNB to the user equipment, an autonomous denial request message when the eNB needs to adjust a control channel; and
step 203: receiving, by the eNB, an autonomous denial report fed back by the user equipment; wherein the autonomous denial report includes autonomous denial information of the user equipment.

In this embodiment, determining by the eNB that it needs to adjust a control channel includes: determining by the eNB the number of dropped or erring control channels exceeds a predefined proportion within a predefined period of time. However, it is not limited thereto, and the eNB may employ the relevant art in deciding that a control channel needs to be adjusted, which shall not be described herein any further

In a particular implementation, in a mode of implementation, the autonomous denial request message may include: a starting point of the predefined time. And the autonomous denial report may include: which uplink subframes are autonomously denied by the user equipment from the starting point of the predefined time to the current moment, or the number of the uplink subframes autonomously denied by the user equipment from the starting point of the predefined time to the current moment.

For example, if the predefined time is 12:00 and the current moment is 14:30, the user equipment will generate an autonomous denial report according to autonomous denial information recorded within this period of time 12:00-14:30. Which uplink subframes are autonomous denied may be denoted by using a bit string; wherein, each bit corresponds to an uplink subframe, "1" denoting transmission of the uplink subframe is autonomous denied by the user equipment.

Or, the number of autonomous denied uplink subframes may be denoted by using a numeral. For example, if "12" is contained in the autonomous denial report, it denotes that the number of autonomous denied uplink subframes within this period of time 12:00-14:30 is "12".

In another mode of implementation, the autonomous denial request message may include: a length of the predefined time. And the autonomous denial report may include: which uplink subframes are autonomously denied by the user equipment within the predefined time prior to the current moment, or the number of the uplink subframes autonomously denied by the user equipment within the predefined time prior to the current moment.

For example, if the length of the predefined time is 60 (denoting 60 minutes, i.e. 1 hour) and the current moment is 14:30, the user equipment will generate an autonomous denial report according to autonomous denial information recorded within this period of time 13:30-14:30. Which uplink subframes are autonomous denied may be denoted by using a bit string; wherein, each bit corresponds to an uplink subframe, "1" denoting transmission of the uplink subframe is autonomous denied by the user equipment.

Or, the number of autonomous denied uplink subframes may be denoted by using a numeral. For example, if "12" is contained in the autonomous denial report, it denotes that the number of autonomous denied uplink subframes within this period of time 13:30-14:30 is "12".

In still another mode of implementation, the autonomous denial request message may include: the starting point of the predefined time and the length of the predefined time. And the autonomous denial report may include: which uplink subframes are autonomously denied by the user equipment within the predefined time starting from the starting point of the predefined time, or the number of the uplink subframes autonomously denied by the user equipment within the predefined time starting from the starting point of the predefined time.

For example, if the length of the predefined time is 60 (denoting 60 minutes, i.e. 1 hour) and the starting point of the predefined time is 12:00, the user equipment will generate an autonomous denial report according to autonomous denial information recorded within this period of time 12:00-13:00. Which uplink subframes are autonomous denied may be denoted by using a bit string; wherein, each bit corresponds to an uplink subframe, "1" denoting transmission of the uplink subframe is autonomous denied by the user equipment.

Or, the number of autonomous denied uplink subframes may be denoted by using a numeral. For example, if "12" is contained in the autonomous denial report, it denotes that the number of autonomous denied uplink subframes within this period of time 12:00-13:00 is "12".

It should be noted that the above description of particular forms of autonomous denial request information and autonomous denial report is illustrative only. However, it is not limited thereto, and a particular mode of implementation may be determined by those skilled in the art in a particular implementation according to the above illustrative description.

As shown in Fig. 2, after receiving the autonomous denial report fed back by the user equipment, the control method may further includes:
step 204: determining, by the eNB, according to the autonomous denial report, whether to adjust the control channel, and performing adjustment of the control channel according to the autonomous denial report when the eNB determines to adjust the control channel.

In this embodiment, after receiving a message of the autonomous denial report, the eNB may take no judgment of control channel dropping and/or error due to the autonomous denial into account in counting a control channel dropping rate and/or error rate.

For example, it is predefined that when the number of times of control channel dropping within a certain period of time reaches 12, the eNB needs to adjust the control channel. If it is counted by the eNB that the number of times of control channel dropping within this period of time is 12, the eNB will transmit an autonomous denial request message, and learn that the number of times of autonomous denial of the user equipment within this period of time is 8 according to the autonomous denial report. Thus, the eNB may recognize that an actual number of times of dropping due to the control channel itself is only 4, and adjustment of a control channel is not needed, thereby more accurately deciding whether to adjust a control channel.

An embodiment of the present invention further provides an eNB, applicable to control of autonomous denial; wherein, contents identical to those in the above control method shall not be described herein any further.

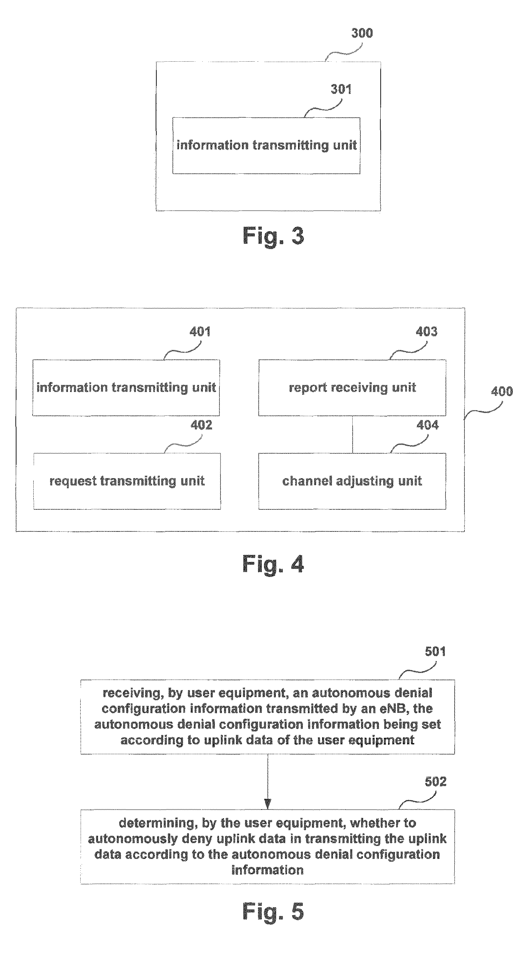

Fig. 3 is a schematic diagram of the structure of the eNB of an embodiment of the present invention. As shown in Fig. 3, the eNB 300 includes: an information transmitting unit 301. The relevant art may be referred to for other parts of the eNB, which are not shown in this figure;
wherein, the information transmitting unit 301 is configured to transmit autonomous denial configuration information to user equipment, the autonomous denial configuration information being set according to uplink data of the user equipment.

In this embodiment, the autonomous denial configuration information may be set according to importance of the uplink data, or is set according to a type of the uplink data.

In this embodiment, the autonomous denial configuration information may include the following information: if the uplink data contains bundled ACK/NACK, the autonomous denial of the uplink data is disabled; or, if the number of pieces of the bundled ACK/NACK contained in the uplink data exceeds a certain threshold, the autonomous denial of the uplink data is disabled; or, if the uplink data have a high requirement on QoS, the autonomous denial of the uplink data is disabled.

Fig. 4 is another schematic diagram of the structure of the eNB of an embodiment of the present invention. As shown in Fig. 4, the eNB 400 includes an information transmitting unit 401, as described above.

As shown in Fig. 4, the eNB 400 may further include a request transmitting unit 402 and a report receiving unit 403;
wherein, the request transmitting unit 402 is configured to transmit an autonomous denial request message to the user equipment when the eNB needs to adjust a control channel, and the report receiving unit 403 is configured to receive an autonomous denial report fed back by the user equipment, the autonomous denial report including autonomous denial information of the user equipment.

As shown in Fig. 4, the eNB 400 may further include a channel adjusting unit 404. The channel adjusting unit 404 is configured to determine whether to adjust the control channel according to the autonomous denial report, and perform adjustment of the control channel according to the autonomous denial report when the eNB determines to adjust the control channel.

In a mode of implementation, the autonomous denial request message may include a starting point of the predefined time, and the autonomous denial report may include which uplink subframes are autonomously denied by the user equipment from the starting point of the predefined time to the current moment, or the number of the uplink subframes autonomously denied by the user equipment from the starting point of the predefined time to the current moment.

In another mode of implementation, the autonomous denial request message may include a length of the predefined time, and the autonomous denial report may include which uplink subframes are autonomously denied by the user equipment within the predefined time prior to the current moment, or the number of the uplink subframes autonomously denied by the user equipment within the predefined time prior to the current moment.

In still another mode of implementation, the autonomous denial request message may include the starting point of the predefined time and the length of the predefined time, and the autonomous denial report includes: which uplink subframes are autonomously denied by the user equipment within the predefined time starting from the starting point of the predefined time, or the number of the uplink subframes autonomously denied by the user equipment within the predefined time starting from the starting point of the predefined time.

It can be seen from the above embodiment that with the autonomous denial configuration information set according to the uplink data of the user equipment, the uplink data may be autonomously denied more accurately, which will not result in degradation of the system performance.

And as the eNB transmits an autonomous denial request message to the user equipment in need of adjusting a control channel, information of the user equipment on autonomous denial may be obtained. The user equipment needs not to frequently report in which subframes an autonomous denial mechanism is employed, thereby making the adjustment of the control channel by the eNB more accurate, and the signaling overhead being not increased.

### Embodiment 2

An embodiment of the present invention further provides a control method for autonomous denial; wherein, contents identical to those at the eNB side in Embodiment 1 shall not be described herein any further.

Fig. 5 is a flowchart of the control method for autonomous denial of the embodiment of the present invention. As shown in Fig. 5, at a user equipment side, the control method includes:
step 501: receiving, by user equipment, an autonomous denial configuration information transmitted by an eNB, the autonomous denial configuration information being set according to uplink data of the user equipment; and
step 502: determining, by the user equipment, whether to autonomously deny uplink data in transmitting the uplink data according to the autonomous denial configuration information.

In this embodiment, the autonomous denial configuration information may be set according to importance of the uplink data, or is set according to a type of the uplink data.

In this embodiment, the autonomous denial configuration information may include the following information: if the uplink data contains bundled ACK/NACK, the autonomous denial of the uplink data is disabled; or, if the number of pieces of the bundled ACK/NACK contained in the uplink data exceeds a certain threshold, the autonomous denial of the uplink data is disabled; or, if the uplink data have a high requirement on QoS, the autonomous denial of the uplink data is disabled.

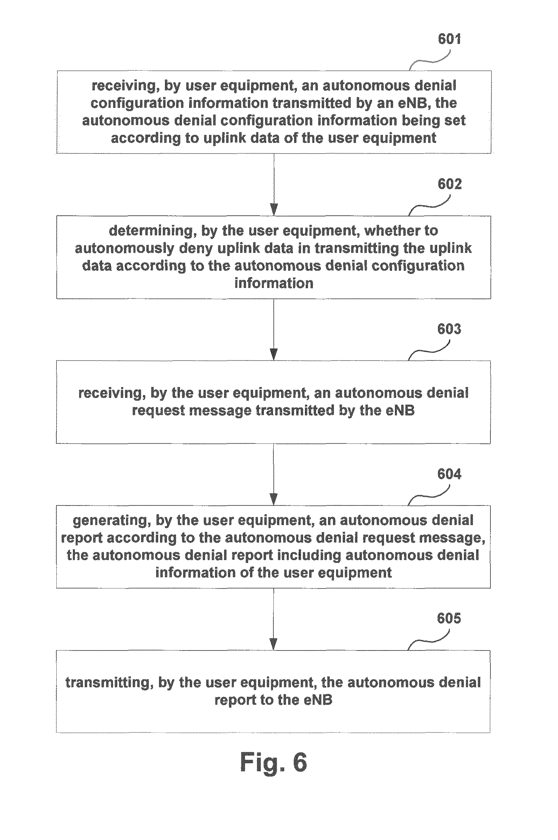

Fig. 6 is another flowchart of the control method for autonomous denial of an embodiment of the present invention. As shown in Fig. 6, at the user equipment side, the control method includes:
step 601: receiving, by user equipment, an autonomous denial configuration information transmitted by an eNB, the autonomous denial configuration information being set according to uplink data of the user equipment; and
step 602: determining, by the user equipment, whether to autonomously deny uplink data in transmitting the uplink data according to the autonomous denial configuration information.

In this embodiment, step 602 may be executed multiple times, that is, the user equipment may autonomously deny multiple times (or not employ the autonomous denial) according to the autonomous denial configuration information after obtaining the autonomous denial configuration information.

As shown in Fig. 6, after the user equipment receives the autonomous denial configuration information transmitted by the eNB, the control method further includes:
step 603: receiving, by the user equipment, an autonomous denial request message transmitted by the eNB;
step 604: generating, by the user equipment, an autonomous denial report according to the autonomous denial request message, the autonomous denial report including autonomous denial information of the user equipment; and
step 605: transmitting, by the user equipment, the autonomous denial report to the eNB.

It should be noted that there is no an ordinal relationship between step 602 and steps 603-605. Steps 603-605 may be executed after step 602 is executed multiple times, or step 602 may be executed after steps 603-605 are executed once. However, it is not limited thereto, and a particular mode of implementation may be determined according to an actual situation.

In a mode of implementation, the autonomous denial request message may include a starting point of the predefined time, and the autonomous denial report may include which uplink subframes are autonomously denied by the user equipment from the starting point of the predefined time to the current moment, or the number of the uplink subframes autonomously denied by the user equipment from the starting point of the predefined time to the current moment.

In another mode of implementation, the autonomous denial request message may include a length of the predefined time, and the autonomous denial report may include which uplink subframes are autonomously denied by the user equipment within the predefined time prior to the current moment, or the number of the uplink subframes autonomously denied by the user equipment within the predefined time prior to the current moment.

In still another mode of implementation, the autonomous denial request message may include the starting point of the predefined time and the length of the predefined time, and the autonomous denial report includes: which uplink subframes are autonomously denied by the user equipment within the predefined time starting from the starting point of the predefined time, or the number of the uplink subframes autonomously denied by the user equipment within the predefined time starting from the starting point of the predefined time.

An embodiment of the present invention further provides user equipment, applicable to control of autonomous denial; wherein, contents identical to those in the above control method shall not be described herein any further.

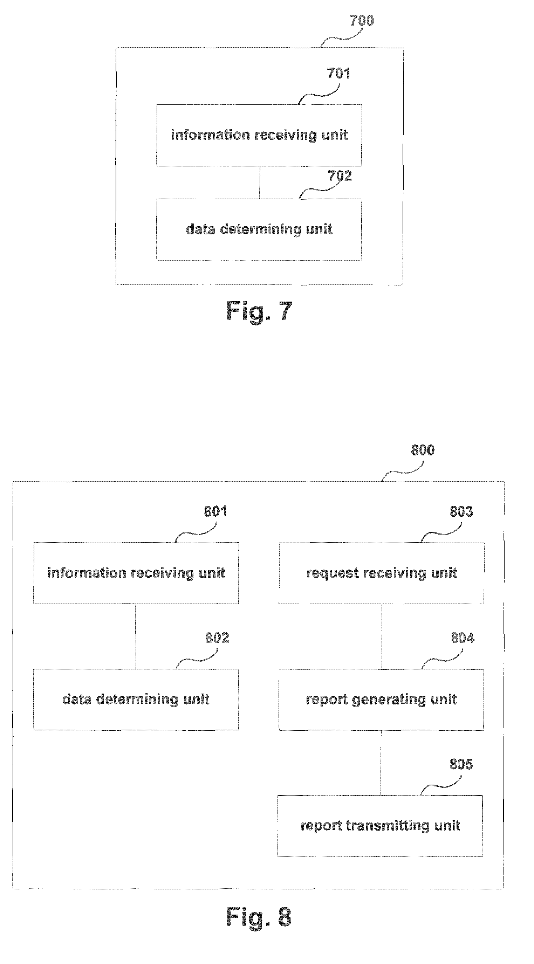

Fig. 7 is a schematic diagram of the structure of the user equipment of an embodiment of the present invention. As shown in Fig. 7, the user equipment 700 includes: an information receiving unit 701 and a data determining unit 702. The relevant art may be referred to for other parts of the user equipment, which are not shown in this figure;
wherein, the information receiving unit 701 is configured to receive an autonomous denial configuration information transmitted by an eNB, the autonomous denial configuration information being set according to uplink data of the user equipment, and the data determining unit 702 is configured to determine whether to autonomously deny uplink data in transmitting the uplink data according to the autonomous denial configuration information.

In this embodiment, the autonomous denial configuration information may be set according to importance of the uplink data, or is set according to a type of the uplink data.

In this embodiment, the autonomous denial configuration information may include the following information: if the uplink data contains bundled ACK/NACK, the autonomous denial of the uplink data is disabled; or, if the number of pieces of the bundled ACK/NACK contained in the uplink data exceeds a certain threshold, the autonomous denial of the uplink data is disabled; or, if the uplink data have a high requirement on QoS, the autonomous denial of the uplink data is disabled.

Fig. 8 is another schematic diagram of the structure of the user equipment of the embodiment of the present invention. As shown in Fig. 8, the user equipment 800 includes an information receiving unit 801 and a data determining unit 802, as described above.

As shown in Fig. 8, the user equipment 800 may further include: a request receiving unit 803, a report generating unit 804 and a report transmitting unit 805;
wherein, the request receiving unit 803 is configured to receive an autonomous denial request message transmitted by an eNB, the report generating unit 804 is configured to generate an autonomous denial report according to the autonomous denial request message, the autonomous denial report including autonomous denial information of the user equipment, and the report transmitting unit 805 is configured to transmit the autonomous denial report to the eNB.

In a mode of implementation, the autonomous denial request message may include a starting point of the predefined time, and the autonomous denial report may include which uplink subframes are autonomously denied by the user equipment from the starting point of the predefined time to the current moment, or the number of the uplink subframes autonomously denied by the user equipment from the starting point of the predefined time to the current moment.

In another mode of implementation, the autonomous denial request message may include a length of the predefined time, and the autonomous denial report may include which uplink subframes are autonomously denied by the user equipment within the predefined time prior to the current moment, or the number of the uplink subframes autonomously denied by the user equipment within the predefined time prior to the current moment.

In still another mode of implementation, the autonomous denial request message may include the starting point of the predefined time and the length of the predefined time, and the autonomous denial report includes: which uplink subframes are autonomously denied by the user equipment within the predefined time starting from the starting point of the predefined time, or the number of the uplink subframes autonomously denied by the user equipment within the predefined time starting from the starting point of the predefined time.

It can be seen from the above embodiment that with the autonomous denial configuration information set according to the uplink data of the user equipment, the uplink data may be autonomously denied more accurately, which will not result in degradation of the system performance.

And as the eNB transmits an autonomous denial request message to the user equipment in need of adjusting a control channel, information of the user equipment on autonomous denial may be obtained. The user equipment needs not to frequently report in which subframes an autonomous denial mechanism is employed, thereby making the adjustment of the control channel by the eNB more accurate, and the signaling overhead being not increased.

### Embodiment 3

An embodiment of the present invention further provides a control method for autonomous denial; wherein, contents identical to those in Embodiment 1 shall not be described herein any further.

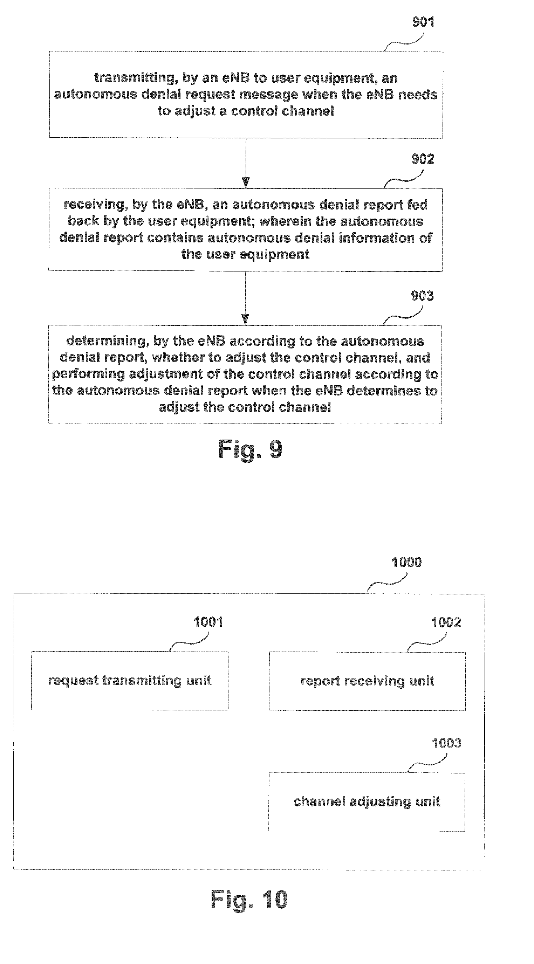

Fig. 9 is a flowchart of the control method for autonomous denial of an embodiment of the present invention. As shown in Fig. 9, at an eNB side, the method includes:
step 901: transmitting, by an eNB to user equipment, an autonomous denial request message when the eNB needs to adjust a control channel; and
step 902: receiving, by the eNB, an autonomous denial report fed back by the user equipment; wherein the autonomous denial report contains autonomous denial information of the user equipment.

In this embodiment, the need of adjusting the control channel by the eNB includes: determining by the eNB that the number of dropped or erring control channels exceeds a predefined proportion within a predefined time. However, it is not limited thereto, and the eNB may employ the relevant art in deciding that a control channel needs to be adjusted, which shall not be described herein any further.

In this embodiment, for an autonomous denial mechanism, the method configured by the eNB described in Embodiment 1 may be employed. However, this embodiment is not limited thereto, and other mechanisms may also be employed, such a method in the relevant art.

In a mode of implementation, the autonomous denial request message may include a starting point of the predefined time, and the autonomous denial report may include which uplink subframes are autonomously denied by the user equipment from the starting point of the predefined time to the current moment, or the number of the uplink subframes autonomously denied by the user equipment from the starting point of the predefined time to the current moment.

In another mode of implementation, the autonomous denial request message may include a length of the predefined time, and the autonomous denial report may include which uplink subframes are autonomously denied by the user equipment within the predefined time prior to the current moment, or the number of the uplink subframes autonomously denied by the user equipment within the predefined time prior to the current moment.

In still another mode of implementation, the autonomous denial request message may include the starting point of the predefined time and the length of the predefined time, and the autonomous denial report includes: which uplink subframes are autonomously denied by the user equipment within the predefined time starting from the starting point of the predefined time, or the number of the uplink subframes autonomously denied by the user equipment within the predefined time starting from the starting point of the predefined time.

As shown in Fig. 9, after receiving the autonomous denial report fed back by the user equipment, the method may further include:
step 903: determining, by the eNB, according to the autonomous denial report, whether to adjust the control channel, and performing adjustment of the control channel according to the autonomous denial report when the eNB determines to adjust the control channel.

In this embodiment, after receiving a message of the autonomous denial report, the eNB may take no judgment of control channel dropping and/or error due to the autonomous denial into account in counting a control channel dropping rate and/or error rate.

An embodiment of the present invention further provides an eNB, applicable to control of autonomous denial; wherein, contents identical to those in the above control method shall not be described herein any further.

Fig. 10 is a schematic diagram of the structure of the eNB of the embodiment of the present invention. As shown in Fig. 10, the eNB 1000 includes a request transmitting unit 1001 and a report receiving unit 1002. The relevant art may be referred to for other parts of the eNB, which are not shown in this figure;
wherein, the request transmitting unit 1001 is configured to transmit an autonomous denial request message to user equipment when needing to adjust a control channel, and the report receiving unit 1002 is configured to receive an autonomous denial report fed back by the user equipment, the autonomous denial report including autonomous denial information of the user equipment.

As shown in Fig.10, the eNB 1000 may further include a channel adjusting unit 1003 configured to determine whether to adjust the control channel according to the autonomous denial report, and perform adjustment of the control channel according to the autonomous denial report when determining to adjust the control channel.

It can be seen from the above embodiment that as the eNB transmits an autonomous denial request message to the user equipment in need of adjusting a control channel, information of the user equipment on autonomous denial may be obtained. The user equipment needs not to frequently report in which subframes an autonomous denial mechanism is employed, thereby making the adjustment of the control channel by the eNB more accurate, and the signaling overhead being not increased.

### Embodiment 4

An embodiment of the present invention further provides a control method for autonomous denial; wherein, contents identical to those at the eNB side in Embodiment 3 shall not be described herein any further.

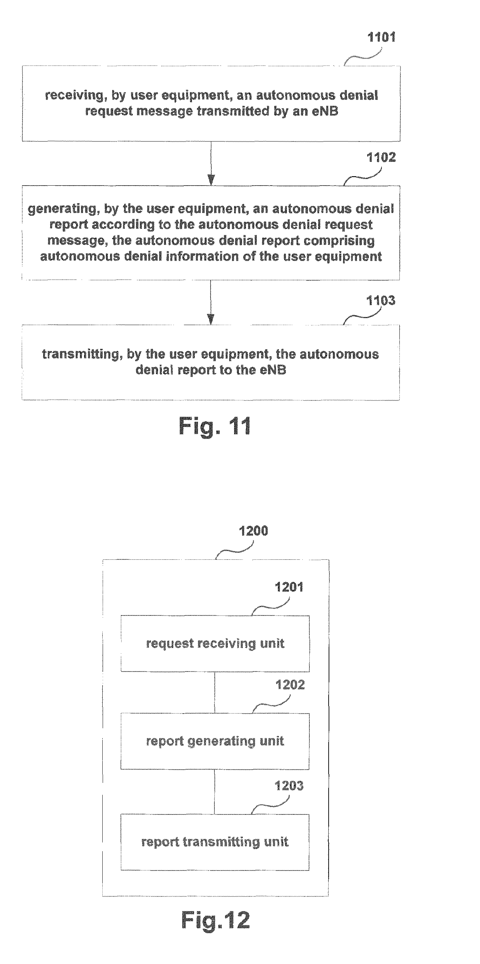

Fig. 11 is a flowchart of the control method for autonomous denial of an embodiment of the present invention. As shown in Fig.11, at a user equipment side, the control method includes:
step 1101: receiving, by user equipment, an autonomous denial request message transmitted by an eNB;
step 1102: generating, by the user equipment, an autonomous denial report according to the autonomous denial request message, the autonomous denial report comprising autonomous denial information of the user equipment; and
step 1103: transmitting, by the user equipment, the autonomous denial report to the eNB.

An embodiment of the present invention further provides user equipment, applicable to control of autonomous denial; wherein, contents identical to those in the above control method shall not be described herein any further

Fig.12 is a schematic diagram of the structure of the user equipment of the embodiment of the present invention. As shown in Fig. 12, the user equipment 1200 includes a request receiving unit 1201, a report generating unit 1202 and a report transmitting unit 1203; wherein, the relevant art may be referred to for other parts of the user equipment, which are not shown in this figure;
wherein, the request receiving unit 1201 is configured to receive an autonomous denial request message transmitted by an eNB, the report generating unit 1202 is configured to generate an autonomous denial report according to the autonomous denial request message, the autonomous denial report comprising autonomous denial information of the user equipment, and the report transmitting unit 1203 is configured to transmit the autonomous denial report to the eNB.

It can be seen from the above embodiment that as the eNB transmits an autonomous denial request message to the user equipment in need of adjusting a control channel, information of the user equipment on autonomous denial may be obtained. The user equipment needs not to frequently report in which subframes an autonomous denial mechanism is employed, thereby making the adjustment of the control channel by the eNB more accurate, and the signaling overhead being not increased.

An embodiment of the present invention further provides a control system for autonomous denial, including the eNB as described above and the user equipment as described.

An embodiment of the present invention further provides a computer-readable program, wherein when the program is executed in an eNB, the program enables a computer to carry out the control method for autonomous denial as described above in the eNB.

An embodiment of the present invention further provides a storage medium in which a computer-readable program is stored, wherein the computer-readable program enables a computer to carry out the control method for autonomous denial as described above in an eNB.

An embodiment of the present invention further provides a storage medium in which a computer-readable program, wherein when the program is executed in user equipment, the program enables a computer to carry out the control method for autonomous denial as described above in the user equipment.

An embodiment of the present invention further provides a storage medium in which a computer-readable program is stored, wherein the computer-readable program enables a computer to carry out the control method for autonomous denial as described above in user equipment.

The above apparatuses and methods of the present invention may be implemented by hardware, or by hardware in combination with software. The present invention relates to such a computer-readable program that when the program is executed by a logic device, the logic device is enabled to carry out the apparatus or components as described above, or to carry out the methods or steps as described above. The present invention also relates to a storage medium for storing the above program, such as a hard disk, a floppy disk, a CD, a DVD, and a flash memory, etc.

One or more functional blocks and/or one or more combinations of the functional blocks in the accompanying drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present invention is described above with reference to particular embodiments. However, it should be understood by those skilled in the art that such a description is illustrative only, and not intended to limit the protection scope of the present invention. Various variants and modifications may be made by those skilled in the art according to the spirits and principle of the present invention, and such variants and modifications fall within the scope of the present invention.

## Claims

1. A control method for autonomous denial, comprising:
transmitting, by an eNB to user equipment, autonomous denial configuration information, so that the user equipment performs autonomous denial according to the autonomous denial configuration information; wherein the autonomous denial configuration information is set according to uplink data of the user equipment.

2. The control method according to claim 1, wherein the autonomous denial configuration information is set according to importance of the uplink data, or is set according to a type of the uplink data.

3. The control method according to claim 1 or 2, wherein the autonomous denial configuration information comprises the following information: if the uplink data contains bundled ACK/NACK, the autonomous denial of the uplink data is disabled; or, if the number of pieces of the bundled ACK/NACK contained in the uplink data exceeds a certain threshold, the autonomous denial of the uplink data is disabled; or, if the uplink data have a high requirement on quality of service, the autonomous denial of the uplink data is disabled.

4. The control method according to claim 1, wherein after the eNB transmits the autonomous denial configuration information to the user equipment, the control method further comprises:
transmitting, by the eNB to the user equipment, an autonomous denial request message when it is needed to adjust a control channel; and
receiving, by the eNB, an autonomous denial report fed back by the user equipment; wherein the autonomous denial report comprises autonomous denial information of the user equipment.

5. The control method according to claim 4, wherein after the eNB receives the autonomous denial report fed back by the user equipment, the control method further comprises:
determining, by the eNB according to the autonomous denial report, whether to adjust the control channel, and performing adjustment of the control channel according to the autonomous denial report when it is determined to adjust the control channel.

6. A control method for autonomous denial, comprising:
transmitting, by an eNB to user equipment, an autonomous denial request message when it is needed to adjust a control channel; and
receiving, by the eNB, an autonomous denial report fed back by the user equipment; wherein the autonomous denial report contains autonomous denial information of the user equipment.

7. The control method according to claim 6, wherein after receiving the autonomous denial report fed back by the user equipment, the control method further comprises:
determining, by the eNB according to the autonomous denial report, whether to adjust the control channel, and performing adjustment of the control channel according to the autonomous denial report when it is determined to adjust the control channel.

8. The control method according to claim 6, wherein a need of adjusting the control channel comprises: determining by the eNB that the number of dropped or erring control channels exceeds a predefined proportion within a predefined time.

9. The control method according to claim 6, wherein the autonomous denial request message comprises: a starting point of the predefined time;
and the autonomous denial report comprises: which uplink subframes are autonomously denied by the user equipment from the starting point of the predefined time to a current moment, or the number of the uplink subframes autonomously denied by the user equipment from the starting point of the predefined time to the current moment.

10. The control method according to claim 6, wherein the autonomous denial request message comprises: a length of the predefined time;
and the autonomous denial report comprises: which uplink subframes are autonomously denied by the user equipment within the predefined time prior to a current moment, or the number of the uplink subframes autonomously denied by the user equipment within the predefined time prior to the current moment.

11. The control method according to claim 6, wherein the autonomous denial request message comprises: the starting point of the predefined time and the length of the predefined time;
and the autonomous denial report comprises: which uplink subframes are autonomously denied by the user equipment within the predefined time starting from the starting point of the predefined time, or the number of the uplink subframes autonomously denied by the user equipment within the predefined time starting from the starting point of the predefined time.

12. A control method for autonomous denial, comprising:
receiving, by user equipment, an autonomous denial request message transmitted by an eNB;
generating, by the user equipment, an autonomous denial report according to the autonomous denial request message, the autonomous denial report comprising autonomous denial information of the user equipment; and
transmitting, by the user equipment, the autonomous denial report to the eNB.

13. The control method according to claim 12, wherein the autonomous denial request message comprises: a starting point of a predefined time;
and the autonomous denial report comprises: which uplink subframes are autonomously denied by the user equipment from the starting point of the predefined time to a current moment, or the number of the uplink subframes autonomously denied by the user equipment from the starting point of the predefined time to the current moment.

14. The control method according to claim 12, wherein the autonomous denial request message comprises: a length of the predefined time;
and the autonomous denial report comprises: which uplink subframes are autonomously denied by the user equipment within the predefined time prior to a current moment, or the number of the uplink subframes autonomously denied by the user equipment within the predefined time prior to the current moment.

15. The control method according to claim 12, wherein the autonomous denial request message comprises: the starting point of the predefined time and the length of the predefined time;
and the autonomous denial report comprises: which uplink subframes are autonomously denied by the user equipment within the predefined time starting from the starting point of the predefined time, or the number of the uplink subframes autonomously denied by the user equipment within the predefined time starting from the starting point of the predefined time.

16. An eNB, comprising:
an information transmitting unit, configured to transmit autonomous denial configuration information to user equipment, so that the user equipment performs autonomous denial according to the autonomous denial configuration information; wherein the autonomous denial configuration information is set according to uplink data of the user equipment.

17. The eNB according to claim 16, wherein the eNB further comprises:
a request transmitting unit, configured to transmit an autonomous denial request message to the user equipment when it is needed to adjust a control channel; and
a report receiving unit, configured to receive an autonomous denial report fed back by the user equipment, the autonomous denial report comprising autonomous denial information of the user equipment.

18. The eNB according to claim 17, wherein the eNB further comprises:
a channel adjusting unit, configured to determine whether to adjust the control channel according to the autonomous denial report, and perform adjustment of the control channel according to the autonomous denial report when it is determined to adjust the control channel.

19. An eNB, comprising:
a request transmitting unit, configured to transmit an autonomous denial request message to user equipment when it is needed to adjust a control channel; and
a report receiving unit, configured to receive an autonomous denial report fed back by the user equipment, the autonomous denial report comprising autonomous denial information of the user equipment.

20. The eNB according to claim 19, wherein the eNB further comprises:
a channel adjusting unit, configured to determine whether to adjust the control channel according to the autonomous denial report, and perform adjustment of the control channel according to the autonomous denial report when it is determined to adjust the control channel.

21. User equipment, comprising:
a request receiving unit, configured to receive an autonomous denial request message transmitted by an eNB;
a report generating unit, configured to generate an autonomous denial report according to the autonomous denial request message, the autonomous denial report comprising autonomous denial information of the user equipment; and
a report transmitting unit, configured to transmit the autonomous denial report to the eNB.

22. A control system for autonomous denial, comprising the eNB as claimed in any one of claims 16-20 and the user equipment as claimed in claim 21.

23. A computer-readable program, wherein when the program is executed in an eNB, the program enables a computer to cany out the control method for autonomous denial as claimed in any one of claims 1-11 in the eNB.

24. A storage medium in which a computer-readable program is stored, wherein the computer-readable program enables a computer to carry out the control method for autonomous denial as claimed in any one of claims 1-11 in an eNB.

25. A computer-readable program, wherein when the program is executed in user equipment, the program enables a computer to carry out the control method for autonomous denial as claimed in any one of claims 12-15 in the user equipment.

26. A storage medium in which a computer-readable program is stored, wherein the computer-readable program enables a computer to carry out the control method for autonomous denial as claimed in any one of claims 12-15 in user equipment.
